(19) Europäisches Patentamt
European Patent Office
Office européen des brevets

(11) Veröffentlichungsnummer: **0 004 090**
**B2**

(12) **NEUE EUROPÄISCHE PATENTSCHRIFT**

(45) Veröffentlichungstag der neuen Patentschrift: **17.12.86**

(51) Int. Cl.⁴: **C 25 D 13/06**, C 08 G 59/00, C 09 D 3/58, C 09 D 3/72, C 08 G 18/00

(21) Anmeldenummer: **79100735.4**

(22) Anmeldetag: **12.03.79**

(54) **Kathodisch abscheidbares wässriges Elektrotauchlack-Überzugsmittel.**

(30) Priorität: **13.03.78 AT 1766/78**

(43) Veröffentlichungstag der Anmeldung: **19.09.79 Patentblatt 79/19**

(45) Bekanntmachung des Hinweises auf die Patenterteilung: **21.10.81 Patentblatt 81/42**

(45) Bekanntmachung des Hinweises auf die Entscheidung über den Einspruch: **17.12.86 Patentblatt 86/51**

(84) Benannte Vertragsstaaten: **BE DE FR GB IT NL SE**

(56) Entgegenhaltungen:
**DE-A-2 057 799**
**DE-A-2 252 536**
**DE-A-2 342 603**
**DE-A-2 612 783**
**DE-B-2 363 074**
**GB-A-1 127 706**
**JP-B-52 025 830**
**US-A-3 793 417**
**US-A-3 975 251**

**Referat Nr. 25 731Y/15, veröffentlicht am 8.6.1977 in Central Patents Index, Basic Abstracts Journal Section A-Plasdoc, Derwent Publication Ltd, London, England**
**Kittel "Lehrbuch der Lacke und Beschichtungen" Band I, Teil 2, Verlag W.A. Colomb (1973)**

(73) Patentinhaber: **Herberts Gesellschaft mit beschränkter Haftung, Christbusch 25, D-5600 Wuppertal 2 (DE)**

(72) Erfinder: **Patzschke, Hans- Peter, Dr., Am Heckendorn 71, D-5600 Wuppertal 2 (DE)**
Erfinder: **Göbel, Armin, Osteroder Strasse 27, D-5600 Wuppertal 2 (DE)**

(74) Vertreter: **Türk, Dietmar, Dr. rer. nat., Türk, Gille + Hrabal Patentanwälte Bruckner Strasse 20, D-4000 Düsseldorf 13 (DE)**

EP 0 004 090 B2

**Beschreibung**

Die Herstellung von Überzügen durch elektrisches Abscheiden von filmbildenden Materialien auf elektrisch leitende Metallkörper unter Einfluß einer angelegten Spannung ist bekannt und findet aus Rationalisierungsgründen immer stärkere Verbreitung in der Technik. Die dabei eingesetzten Harze bestehen überwiegend aus carboxylgruppenhaltigen Bindemitteln wie Alkydharze, Acrylharze, Maleinatöle, maleinisierte Epoxiharzester oder maleinisierte Butadienöle, die durch Salzbildung mit Basen wasserlöslich gemacht und durch den elektrischen Strom an der Anode abgeschieden werden. Dieses Vefahren hat den Nachteil, daß während des elektrischen Abscheidens laufend bei der eforderlichen Abscheidespannung an der Anode nascierender Sauerstoff entsteht, der die koagulierten Harze oxidativ in nachteiliger Weise verändern kann, und daß Metallionen in Lösung gehen, die zu einer starken Verfärbung oder auch Fleckenbildung der Überzüge beim Einbrennen führen und die Wassefestigkeit durch Salzbildung beeinträchtigen.

Um diese Nachteile zu beseitigen, werden kathodisch abscheidbare Harze eingesetzt. An der Kathode entwickelt sich Wasserstoff, und es gehen bei annähernd neutralem pH-Wert nur am Anfang des elektrischen Beschichtens Metallionen in Lösung. Die Wasserlöslichkeit wird dabei durch das Einführen von tertiären Aminogruppen in den Harzverband und Salzbildung mit Saüren erzielt, (vgl. H. Verdino: J. Oil Col. Chem. Assoc. 59 (1976), 81-85, DE-A 2 728 470). Die im Harz fest gebundenen Aminogruppen verbleiben jedoch beim Einbrennen im Film und beeinflussen als hydrophile Störstellen in nachteiliger Weise dessen Eigenschaften. So verschlechtert ein Steigern der Aminzahl den Korrosionsschutz, die jedoch zur Verbesserung der Löslichkeit bei neutralem pH-Wert wünschenswert wäre. Dieses problem Nird in der DE-B 2 252 536 und DE-A 2 265 195 durch thermisches Vernetzen von Hydroxylgruppen und kleinen Anteilen primäre Aminogruppen enthaltenden Harzen mit blockierten Poiylsocyanaten unter Abspalten der Schutzgruppe wie z.B. phenolen gelöst. Aus den Harzen der DE-A 23 63 074 und DE-A 27 53 861 werden die löslich machenden tertiären Aminogruppen mindestens teilweise durch ß-Eliminierung thermisch abgespalten. Als Nachteil dieser Verfahren ist das Verunreinigen der Abluft durch die hohe Menge an abgespaltenen Schutzgruppen und Aminen anzusehen.

In der US-A 3 975 251 wird ein Vernetzungssystem beschrieben, bei dem das primäre oder sekundäre Aminogruppen enthaltende Harz mit einem Vernetzer, der α,ß-ungesättigte Carbonylgruppen enthält, durch eine Art Michael-Addition vernetzt wird. Diese Art der Filmvernetzung hat den Nachteil, daß bei höheren Temperaturen die Vernetzungsreaktion unter Aufspaltung von Amin teilweise rückläufig ist und zum anderen die Aminogruppen als basische Störstellen im Film erhalten bleiben.

Aus der DE-A 20 57 799 ist ein Elektrotauchlack-Überzugsmittel bekannt, das ein aminhaltiges organisches Belagmaterial in Kombination mit einem blockierten multifunktionellen Isocyanat als Vernetzungsmittel enthält. Das Belagmaterial enthält primäre oder sekundäre, gegebenenfalls auch tertiäre Aminogruppen. Das blockierte Isocyanat weist endständige veresterte Carboxylgruppen auf. Dieses bekannte Elektrotauchlack-Überzugsmittel hat den Nachteil, daß es nicht lagerbeständig ist. Auch die Verwendung der aus DE-A 23 42 603 und DE-A 26 12 783 bekannten blockierten Polyisocyanate als Vernetzungsmittel zur Herstellung von Kunstharzen oder Kunststoffüberzügen führt nicht zu lagerstabilen Überzügen.

Der vorliegenden Erfindung liegt die Aufgabenstellung zugrunde, die bekannten Nachteile weitgehend zu vermeiden. Es wurde nun gefunden, daß dies überraschenderweise dadurch möglich ist, daß man Überzugsmittel verwendet, welche die nachfolgend definierten Eindemittel enthalten.

Gegenstand der vorliegenden Erfindung ist demgemäß ein kathodisch abscheidbares wäßriges Elektrotauchlack-Überzugsmittel, das ein durch Protonisieren mit Säuren wasserverdünnbares organisches Kunstharz-Bindemittel, enthaltend eine organische, aminhaltige Kunstharz-Komponente und ein Vernetzungsmittel aus dem beim Vernetzen niedere Alkohole abgespalten werden, sowie Pigmente, Füllstoffe, Korrosionsschutzinhibitoren, Lackhilfsmittel, gegebenenfalls Katalysatoren und, in einer Menge von bis zu 15-Gew.-%, bezogen auf das Gesamtgewicht des Überzugsmittels, organische Lösungsmittel enthalt, das dadurch gekennzeichnet ist, daß es als Bindemittel enthält

A) 55 bis 95 Gew.-%, bezogen auf die Gesamtmenge des Bindemittels, eines primäre und/oder sekundäre sowie gegebenenfalls auch tertiäre Aminogruppenenthaltenden organischen Kunstharz-Eindemittels mit einem mittleren Molekulargewicht (Mn) von etwa 500 bis 10 000, einem $pK_b$-Wert von etwa 3 bis 7 und einer Aminzahl von etwa 30 bis 150, und

B) 5 bis 45 Gew.-% Vernetzungsmittel mit einem mittleren Molekulargewicht ($\bar{M}n$) von etwa 500 bis 5000, das endständige Carboxylgruppen enthält, von denen ein solcher Anteil mit Monoalkoholen mit 1 bis 6 Kohlenstoffatomen verestert ist, daß die Komponente, B während der Abscheidung nicht zur Anode wandert und eine Esterzahl von 30 bis 350, bevorzugt von 100 bis 250, aufweist, wobei die Estergruppen in neutralem wäßrigem Medium weitgehend stabil sind, jedoch im basischen Medium bei Temperaturen über etwa 140°C gegenüber primären und/oder sekundären-Aminogruppen des Kunstharz-Bindemittels A reaktionsfähig sind, und wobei dann, wenn das Vernetzungsmittel ein Reaktionsprodukt eines Isocyanats mit einer eine Carbonsäureestergruppe enhalten Verbindung ist, es ein Additionsprodukt von Hydroxicarbonsäurealkylestern an Harze mit Isocyanatgruppen ist.

Der $pK_b$-Wert (vgl. Fieser: Lehrbuch der organischen Chemie, dritte Auflage, 1957, Seite 246) beträgt vorzugsweise 3 bis 5,5, besonders bevorzugt 3,5 bis 6. Die unter (B) erwähnte Temperatur liegt zweckmäßig über 160°C.

Beim Einbrennen der abgeschiedenen Bindemittel reagiern die Estergruppen der Komponente B mit den primären und/oder sekundären Aminogruppen der Komponente A unter Amidildung, wobei die basischen

primären und/oder sekundären Aminogruppen ihren störenden basischen Charakter im Film verlieren. Die Reaktion erfolgt im Prinzip gemäß dem folgenden Formelschema:

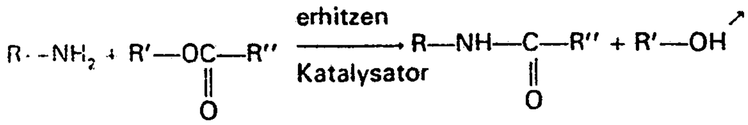


Es werden danach erstens keine Amine beim Einbrennen abgespalten und zweitens aufgrund des niedrigen Molekulargewichts des entstehenden Alkohols nur Spaltprodukte in Mengen unter etwa 8 Gew.-%, bevorzugt unter 5 Gew.-%, gebildet. Auf der Kathode bilden sich festhaftende Überzüge, die nach dem Einbrennen eine sehr hohe Beständigkeit gegen Alkalien und Salzsprühnebel aufweisen und sich schon ohne Korrosionsschutzinhibitoren auf ungebonderten Eisenblechen vorteilhaft bemerkbar machen.

Die reaktive primäre und/oder sekundäre Aminogruppen enthaltende Komponente A wird hergestellt mit einem mittleren Molekulargewicht (Mn) von 500 bis 1 0.000, vorzugsweise von 800 bis 8000, besonders bevorzugt 800 bis 5000. Für das Erzielen einer geeigneten Wasserlöslichkeit ist es nnotwendig, daß sie eine Aminzahl von 30 bis 150, bevorzugt 60 bis 130, besonders bevorzugt 80 bis 120 aufweist. Der Anteil an primären und sekundären Aminogruppen sollte mindestens bei 1/3 der Gesamtzahl liegen, d.h. die Aminzahl sollte über 30, bevorzugt über 50 liegen. Es wird angestrebt, den Anteil an im Molekül vorhandenen tertiären Amingruppen möglichst klein und den Anteil an sekundären bzw. besonders vorteilhaft primären Aminogruppen möglichst hoch zu halten.

Das Einführen von primären und/oder sekundären Aminogruppen in den Harzgrundkörper zur Herstellung der Komponente A erfolgt vorzugsweise durch Umsetzung von mindestens einer, bevorzugt mindestens zwei Epoxigruppen oder Isocyanatgruppen pro Molekül enthaltenden Harzen mit wenigstens einem amino- und/oder hydroxylgruppenhaltigen Ketimin und/oder wenigstens einem polyamin.

Als besonders geeignet erweisen sich für diese Umsetzung epoxigruppenhaltige Harze, die hergestellt werden durch

a) Einführen von Glycidylgruppen über z.B. Epichlorhydrin

aa) in OH-funktionelle Harze (=Polyglycidyläther, Epoxi-Novolake)

ab) in COOH-funktionelle Harze (=Polyglycidylester), oder

ac) in $NH_2$-funktionelle Harze (=Polyglycidylamine)

b) Einpolymerisieren von Glycidyl(meth)acrylat in eine geeignete Monomerenmischung von z.B. Styrol und/oder (Meth)acrylsäureesternverschiedener Kettenlänge und/oder Hydroxialkyl(meth)acrylaten.

Besonders bevorzugt gemäß a) ist, daß die epoxigruppenhaltigen Harze polyglycidyläther der allgemeinen Formel

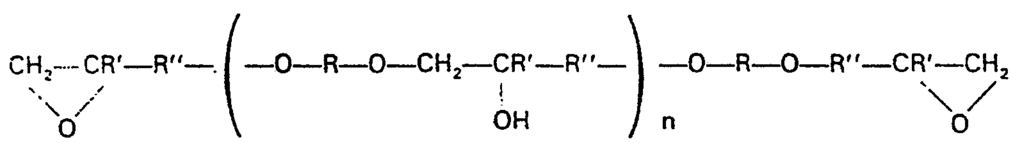

worin bedeuten

R =

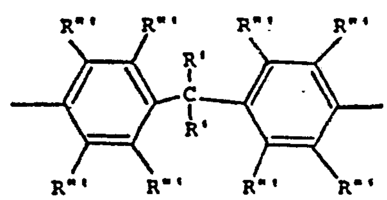

R' = Wasserstoff oder $-C_nH_{2n+1}$
R" = $-(CR'_2)_n-$
R‴ = $-R'$ oder Halogen, vorzugsweise Wasserstoff
n = 0 bis 3

mit einem mittleren Molekulargewicht (Mn) von 340 bis 2000 und einem Epoxiäquivalentgewicht von 170 bis 1

500 sind. Diese Harze können auch in hydrierter Form eingesetzt werden. Um die Eigenschaften des erhaltenen Films zu steuern, ist es oft notwendig, einen Teil der reaktionsfähigen Gruppen des Epoxiharzes mit einem modifizierenden Material umzusetzen. Dazu dienen

a) carboxylgruppenhaltige Verbindungen wie gesättigte oder ungesättige Monocarbonsäuren (z.B. Benzoesäure, Leinölfettsäure, 2-Äthylhexansäure, Versaticsäure), aliphatische, cyciloaliphatische und/ oder aromatische Dicarbonsäuren verschiedener Kettenlänge (z.B. Adipinsäure, Sebacinsäure, Isophthalsäure oder dimere Fettsäuren), Hydroxiaikylcarbonsäuren (z.B. Milchsäure, Dimethylolpropionsäure) sowie carboxylgruppenhaltiger polyester oder

b) aminogruppenhaltige Verbindungen wie Diäthylamin oder Athylhexylamin oder Diamine mit sekundären Aminogruppen, z.B. N,N'-Dialkylalkylendiamin wie Dimethyläthylendiamin, N,N'-Dialkylpolyoxialkylenamin wie N,N'-Dimethyl-polyoxipropylendiamin, cyanalkylierte Alkylendiamine wie Bis-N,N'-Cyanäthyl-äthylendiamin, cyanalkylierte Polyoxialkylenamine wie Bis-N,N'-Cyanäthylpolyoxipropylendiamin, Polyaminoamide wie Versamide oder das Umsetzungsprodukt von einem Mol Diaminohexan mit zwei Molen Monoglycidyläther oder Monoglycidylester, speziell Glycidylester α-verzweigter Fettsäuren wie der Versaticsäure, oder

c) hydroxylgruppenhaltige Verbindungen wie Neopentylglykol, Bis-äthoxiliertes Neopentlyglykol, Hydroxipivalinsäureneopentylglykolester, Dimethylhydantoin-N,N'-diäthanol, Hexandiol-1,6, Hexandiol-2,5, 1,4-Bis-(hydroximethyl)-cyclohexan, 1,1 -Isopropyliden-bis-(p-phenoxi)-2-propanol, Trimethylolpropan, Pentaerythrit oder Aminoalkohole wie Triäthanolamin, Methyldiäthanolamin oder hydroxylgruppenhaltige Alkylketimine wie Aminomethylpropandiol-1,3-methyl-isobutylketimin oder Tris-(hydroximethyl)-aminomethan-cyclohexanonketimin, sowie auch Polyglykoläther, Polyesterpolyole, Polyätherpolyole, Polycaprolactonpolyole, Polycaprolactampolyole verschiedener Funktionalität und Molekulargewichte, oder

d) gesättigte oder ungesättigte Fettsäuremethylester, die in Gegenwart von Natriummethylat mit Hydroxylgruppen der Epoxiharze umgeestert werden (DE-C 943 494).

Durch die Reaktion von polyglycidyläthern auf Basis Bisphenol mit amino- und/oder hydroxylgruppenhaltigen Alkylketiminen entstehen am Epoxiharz sekundäre Hydroxylgruppen. Sollen primäre Hydroxylgruppen vorhanden sein, so muß entweder mit Aminoalkoholen umgesetzt werden oder die entsprechende Hydroxylgruppe muß durch hydrolytische Aufspaltung über die entsprechenden Ester hergestellt werden. Die dabei primär zur Veresterung verwendete niedrigmolekulare Monocarbonsäure, z.B. Milchsäure dient nach der Hydrolyse gleichzeitig als Neutralisierungsmittel.

Epoxidierte polyglycidyläther werden nicht nur auf Basis Bisphenol A hergestellt, sondern können auch andere Grundkomponenten enthalten, wie Triglycidylisocyanurat, heterocyclische Diglycidylverbindungen (DE-A 18 16 095) oder substituierte Hydantoine (US-A 3 391 097).

Bevorzugt ist, daß die epoxigruppenhaltigen Harze Glycidyl(meth)acrylat-Copolymere mit einem mittleren Molekulargewicht ($\bar{M}n$) von 800 bis 8000 und einem Epoxiäquivalent-gewicht von 800 bis 3000 sind, die durch Copolymerisation von Glycidyl(meth)acrylat mit ungesättigten Monomeren erhalten wurden. Ungesättigte Monomere sind z.B. Styrol, Vinyltoluol, (Meth)acrylsäureester verschiedener Kettenlänge, wobei die (Meth)acrylsäureester bevorzugt $C_1$ bis $C_4$-Alkohole und die Acrylsäureester bevorzugt $C_2$ bis $C_8$-Alkohole enthalten.

Als zusätzliche Komponente können gegebenenfalls hydroxylgruppenhaltige Monomere wie Hydroxialkyl(meth)acrylsäureester z.B. 2-Hydroxipropylmethacrylat, 1.4-Butandiolacrylat oder Hydroxiäthylacrylat oder verätherte Methylolderivate des (Meth)acrylamids verwendet werden. Die Mischpolymerisation erfolgt in organischen Lösungsmitteln wie Alkoholen oder Glykoläthern bei etwa 60 bis 145°C unter Zusatz von radikalischen Initiatoren wie peroxiden, Hydroperoxiden, perestern oder thermisch spaltbaren Azoverbindungen. Durch die Wahl der Molverhältnisse der eingesetzten Komponenten ist darauf zu achten, daß kein unumgesetztes niedrigmolekulares Amin im Ansatz zurückbleibt, weil sonst durchbruchartige Oberflächenstörungen bei der elektrophoretischen Abscheidung auftreten können.

Die Reaktionsbedingungen (Reaktionstemperatur, Auswahl des Lösungsmittels) müssen so geführt werden, daß keine die Ketiminbindung zersetzende Substanzen wie Wasser in dem Reaktionsprodukt. vorhanden bleiben. Als Ketimine werden hydroxyl- oder aminogruppenhaltige lineare, verzweigte oder cyclische Alkylketimine verwendet, z.B. produkte folgender Struktur

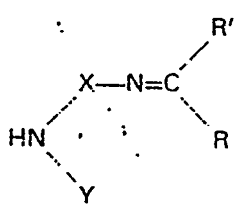
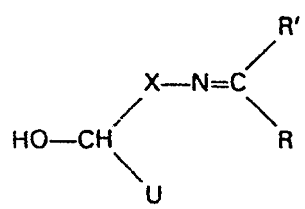
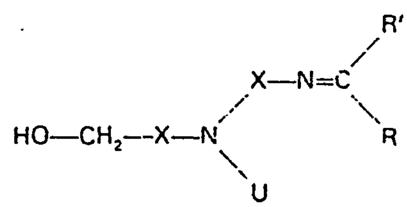

wobei bedeuten:
$X = -CR_2)_n$
$R = -HY,-R'$
$R' = C_mH_{2m+1}, -C_6H_{11}$
$U = -R,-Y-$

Y = 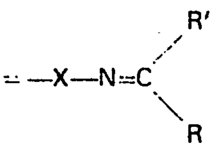 , —X—OH, —R' oder $-CH_2-\underset{OH}{CH}-CH_2-O-Z-R'$

Z = >CO,-X
n = 1-6
m = 1-12

Die Ketimine werden nach bekannten Methoden durch Wasserabspaltung aus den entsprechenden polyaminen der allgemeinen Struktur $R-NH-R-NH_2$ oder den entsprechenden Aminoalkoholen der allgemeinen Struktur $HO-R-NH_2$ und den geeigneten aliphatischen Ketonen wie Diäthylketon, Methylisobutylketon, Athyl-n-propylketon, oder auch Cyclopentanon, Cyclohexanon, Acetophenon usw. hergestellt. Um die Ketiminbildung zu erleichtern, werden Ketone bevorzugt, die es gestatten, auf einfache Weise das Reaktionswasser auszukreisen, und deren Substituenten eine möglichst kleine sterische Hinderung bewirken. Als Amine werden verwendet Diäthylentriamin, N-Methyläthlendiamin, N-Methylpropylendiamin, N-Aminoäthyl-piperazin oder auch das Umsetzungsprodukt von einem Mol 2,2- Dimethyl-propan-1,3-diamin mit einem Mol Glycidylester der Versaticsäure, als Aminoalkohole 2-Aminoäthanol, 1 -Aminopropanol-2, 1 -Aminopropanol-3, 2-Amino-2-methylpropanol-1, 3-Amino-2,2-dimethyl-propanol-1, 1,5-Diaminopentanol-3 oder N-[2-Aminoäthyl]-N-[2-hydroxiäthyl]-äthylendiamin.

Durch die Ketiminbildung wird die primäre Aminogruppe so geschützt (vgl. US-A-3 523 925), daß sie über eine weitere funktionelle Gruppe, z.B. eine sekundäre Aminogruppe oder eine Hydroxylgruppe ohne Schwierigkeiten mit dem Epoxidgrundharz zur Komponente A umgesetzt werden kann. Durch die Wahl der Molverhältnisse der eingesetzten Komponenten muß gewährleistet sein, daß kein unumgesetztes niedrigmolekulares Amin im Ansatz zurückbleibt, weil sonst durchbruchartige Oberflächenstörungen beim elektrophoretischen Beschichten auftreten. Die Reaktion der sekundären Aminogruppe des polyaminoketimins mit der Epoxigruppe beginnt schon bei Raumtemperatur und ist im allgemeinen exotherm. Um eine vollständige Umsetzung zu erreichen, ist es in der Regel notwendig, die Temperatur zeitweise auf 50 bis 120°C zu erhöhen.

Die Reaktion der hydroxylgruppenhaltigen Ketimine mit Epoxigruppen erfolgt etwa im gleichen Temperaturbereich unter Zusatz von basischen Katalysatoren wie tertiären Aminen, z.B. N,N-Dimethylbenzylamin, oder Friedel-Crafts-Katalysatoren wie Bofluorid oder Zinn-11-chlorid. Die Reaktionsbedingungen (Temperatur, Auswahl des Lösungsmittels, wasserfreies Arbeiten)' werden so ausgewählt, daß keine Aufspaltung der Ketimingruppe eintritt. Zur Herstellung von produkten mit niedriger Viskosität ist es oft nützlich, die Ketimin-Lösung vorzulegen und das Grundharz langsam zuzugeben.

Für die Umsetzung mit aminogruppenhaltigen Ketiminen eignen sich auch isocyanatgruppenhaltige polymere, die aus aromatischen, aliphatischen und/oder cycloaliphatischen Grundgerüsten mit mindestens zwei Isocyanatgruppen pro Molekül bestehen. Typische Beispiele sind die Isomeren oder Isomerengemische des Toluylendiisocyanats, 4,4'-Diphenylmethan-diisocyanats sowie ihre Hydrierungsprodukte wie Dicyclohexylmethan-diisocyanat. Außerdem finden Verwendung Hexan-1,6-diisocyanat, 1,6-Diisocyanato-2,2,4-trimethylhexan und 1-Isocyanato-methyl-3-isocyanato-1,5,5-trimethylcyclohexan. Besonders bevorzugt werden dabei höhefunktionnelle polyisocyanate, die durch Trimerisation, Umsetzung mit Wasser, Trimethylolpropan oder aminogruppenhaltigen oder ketimingruppenhaltigen polyolen entstehen. Geeignete isocyanathaltige Präpolymere werden durch Reaktion von Polyglykoläthern, Polyesterpolyolen, Polyätherpolyolen, Polycaprolactonpolyolen, Polycaprolactampolyolen oder Polyaminoamiden mit überschüssigen polyisocyanaten bei Temperaturen von etwa 30 bis 100°C hergestellt, eventuell unter Zusatz von Katalysatoren wie Dibutylzinndilaurat oder tertiären Aminen.

Eine andere bekannte Ausführungsform zum Herstellen von Harzen mit primären und/oder sekundären Aminogruppen ist die Umsetzung von expoxigruppen haltigen Harzen mit niederen aliphatischen, linearen oder verzweigten $C_2$ bis $C_6$-Alkylendiaminen oder polyalkylendiaminen, die besonders dann angebracht sind, wenn die für die Addition, Veresterung oder Umesterung notwendige Reaktionstemperatur so hoch sein muß, daß sich die Ketimine zersetzen oder andere störende Nebenreaktionen den Einsatz von Ketiminen verhindern.

So werden epoxigruppenhaltige Harze aus olefinische Doppelbindungen enthaltenden polykohlenwasserstoffen mit einem mittleren Molekulargewicht ($\bar{M}n$) von 750 bis 6000 und einem Epoxiäquivalentgewicht von 500 bis 2000 mit überschüssigem Athylendiamin oder Diäthylentriamin bei Temperaturen von etwa 120 bis 200°C umgesetzt. Olefinische Doppelbindungen enthaltende Kohlenwasserstoffharze sind z.B. polybutadienöle der verschiedenen sterischen Konfiguration, Copolymerisate des Butadiens mit anderen ungesättigten Monomeren wie Styrol oder flüssiges polypentadien. Sie werden durch Umsetzung mit persäuren wie perameisensäure oder peressigsäure epoxidiert.

Die reaktiveren polyglycidyläther auf Basis Bisphenol A reagieren dagegen schon bei Raumtemperatur. Um Gelierungen zu vermeiden, wird erstens pro Epoxiäquivalent mit 1,1 bis 8 Mol polyamin, bevorzugt 1,2 bis 6 Mol polyamin-Überschuß gearbeitet und zweitens die Epoxiharz-Lösung in das vorgelegte polyamin langsam eingerührt. Das überschüssige Amin muß dann unter Vakuum und Ausschluß von Sauerstoff sehr sorgfältig

abdestilliert werden und kann beim nächsten Ansatz wieder venendet werden. Auf die gleiche Weise lassen sich auch die weiter oben beschriebenen polyisocyanatharze mit polyaminen zu aminogruppenhaltigen Harnstoffen umsetzen.

Polyaminoamide werden aus niederen aliphatischen linearen oder verzweigten polyaminen und/oder Aminoalkoholen, gegebenenfalls im Gemisch mit polyalkoholen. mit mehrbasischen Carbonsäuren und/oder deren Anhydriden hergestellt. Als niedere, aliphatische polyamine und/oder Aminoalkohole, die bevorzugt in stöchiometrischem Uberschuß verwendet werden, dienen z.B. niedere, aliphatische polvamine wie Athylendiamin oder Diäthylentriamin oder Aminoalkohole oder Gemische davon mit mehrbasischen Säuren wie dimerisierte Fettsäure, gegebenenfalls unter Zusatz von geeigneten niedermolekularen Polyolen, wie Neopentylglykol oder Polyglykoläthern, oder höheren polymeren Polyolen, wie Polyesterpolyolen, Polyätherpolyolen, Polycaprolactonpolyolen. Die Abstimmung geeigneter Aminzahlen mit dem Molekulargewichtsbereich efolgt durch Zusatz geeigneter Kettenabbruchmittel wie gesättigen oder ungesättigten Monocarbonsäuren, Monoalkoholen oder Monoaminen. Die Kondensation efolgt in üblicher Weise in der Schmelze oder als aceotrope Kondensation bei Temperaturen von etwa 150 bis 250°C. Ähnliche produkte werden unter den Handelsnamen Beckopox. Versamid oder Merginamid großtechnisch hergestellt.

Solche polyaminoamide können auch durch Umesterung von estergruppenhaltigen Kondensationsharzen mit polyaminen oder auch aminogruppenhaltigen Alkylketiminen unter Abspaltung von, niedrigsiedenden Alkoholen wie Methanol oder Athanol eventuell in Gegenwart von Umesterungskatalysatoren hergestellt werden.

Eine andere bekannte Herstellungweise der Komponente A ergibt sich durch Umsetzung mit niederen Alkyleniminen oder substituierten Aziridinen. So werden in der Literatur

-die Addition von Athylenimin an carboxylgruppenhaltige Copolymere unter Ringöffnung (DE-A 1 595 056),
-die Addition von N-(Hydroxialkyl)-äthylenimin an polyisocyanate ohne Ringöffnung (US-A 3 337 533) und.
-dass Einpolymerisieren von 2-(1-Aziridinyl)-alkyl(meth)acrylaten (US-A 3 480 601) beschrieben.

Durch polymeranaloge Umsetzung mit niedrigmolekularen protonenaktiven Verbindungen wie phenolen, Monoaminen oder Monocarbonsäuren werden die Athyleniminringe im Harz in einem zweiten Reaktionsschritt geöffnet. Dabei entstehen stets Harze mit Aminogruppen, die zur thermischen Vernetzung mit Komponente B befähigt sind. Als Comonomere finden Verwendung α,β-ungesättigte Mono- und/oder Dicarbonsäuren, ihre Ester mit Monoalkoholen verschiedener Kettenlänge, sowie Styrol oder Vinyltoluol. Athylenimin reagiert mit carboxylgruppenhaltigen Acrylatharzen etwa im Temperaturbereich von 50 bis 150°C. Die Menge an Alkylenimin wird stöchiometrisch aus der Anzahl der umzusetzenden Carboxylgruppen errechnet.

Auf einem anderen Weg können aminogruppenhaltige Harze der Komponente A leicht durch katalytische Hydrierung von Copolymerisaten erhalten werden, die (Meth)acrylnitril oder eventuell auch (Meth)acrylamid einpolymerisiert enthalten.

Das Vernetzungsmittel (Komponente B) ist ein Harz mit endständigen, veresterten Carboxylgruppen, die im neutralen wässrigen Medium weitgehend stabil sind, jedoch im basischen Medium des abgeschiedenen Films bei Temperaturen über etwa 140°C mit dem primäre und/oder sekundäre Aminogruppen enthaltenden Kunstharzbindemittel (Komponente A) reagieren. Es sollen im wesentlichen alle endständigen Carboxylgruppen mit Alkoholen verestert werden, die einen Siedepunkt unter 180°C. bevorzugt unter 140°C haben. Um ein Wandern der Komponente B zur Anode zu vermeiden, ist darauf zu achten, daß mindestens 80, bevorzugt 90, besonders bevorzugt 100 Äquivalentprozent der endständigen Carboxylgruppen verestert sind. Die Reaktionsfähigkeit der Ester wird durch den Einsatz primärer Alkohole wie Methanol oder Athanol und durch die Erhöhung der elektrophilen Aktivität der Carboxylgruppe durch geeignete Substituenten gesteigert. Besonders gut hat sich der Einbau von Methyl- und/oder Athylester der Milchsäure und der Monomethyl- und/oder Monoäthylbernsteinsäureester bewährt. Die Anzahl der Estergruppen entspricht einer Esterzahl von 30 bis 350, bevorzugt von 100 bis 250, besonders bevorzugt von 70 bis 180. Diese bezeichnet die Menge in mg KOH, die der Menge Alkohol äquivalent ist. welche in 1 g Festsubstanz enthälten ist und beim thermischen Vernetzen durch Umamidierung abgespalten werden kann. Um die Verträglichkeit zu fördern, soll die Komponente B eine Aminzahl von 0 bis 60 enthalten. Die untere Grenzeliegt vorzugsweise bei 10. besonders bevorzugt bei 20, und die obere Grenze bevorzugt bei 50. Sie soll jedoch so niedrig sein, wie sie für die Stabilität gerade notwendig ist. Es hat sich als vorteilhaft herausgestellt, wenn diese Aminogruppe primärer oder sekundärer Art ist. Das mittlere Molekulargewicht ($\bar{M}n$) der Komponente B beträgt etwa 500 bis 5000, bevorzugt etwa 500 bis 3000.

Solche Vernetzungsmittel lassen sich auf verschiedenen Wegen herstellen, z.B. durch

-Veresterung von maleinisierten ungesättigten Kohlenwasserstoffen, Olen oder Fettsäureepoxiestern,
-Umesterung von hydroxylgruppenhaltigen Harzen mit gesättigten oder ungesättigten Dicarbonsäureestern,
-Polykondensation unter Verwendung von Hydroxicarbonsäurealkylestern oder Dicarbonsäuremonoalkylestern.

Aufgrund der schonendenReaktionsbedingungen und damit verbunden der geringen Vergilbung der Produkte hat sich als besonders brauchbarer Syntheseweg die Addition von Hydroxicarbonsäurealkylestern und/oder Dicarbonsäuremonoalkylestern an Marze mit Isocyanat- oder Epoxigruppen sowie die Addition von Aminoalkylcarbonsaureestern an Harze mit Epoxigruppen erwiesen.

Besonders bevorzugt ist die Addition von Hydroxicarbonsäurealkylestern an aliphatische, cycloaliphatische und/oder aromatische Polyisocyanate mit mindestens zwei Isocyanatgruppen pro Molekül. Es können dabei die weiter oben beschriebenen Polyisocyanateeingesetzt werden; es werden jedoch solche mit mehr als 2

Isocyanatgruppen bevorzugt, wie sie durch Trimerisation, Umsetzung mit Wasser oder Polyolen wie Trimethylolpropan oder Triethanolisocyanurat entstehen. Derartige Produkte werden im Handel angeboten, z.B. Triphenylmethan-4,4',4"-triisocyanat (Desmodur R® ),das Biuret aus Hexamethylendiisocyanat und Wasser (Desmodur N®) oder das Addukt aus Toluylendiisocyanat und Trimethylolpropan (Desmodur L®. Um eine verbesserte Badstabilität zu erzielen, ist oft die Anwesenheit von basischen Aminogruppen im Molekul erwunscht. sie werden durch Verknüpfen von zwei oder mehreren Polyisocyanaten mit Aminoalkoholen eingeführt. Als Aminoalkohole werden bevorzugt aminogruppenhaltige Polyole wie Äthanolamin, N-Methyldiäthanolamin oder Triathanolamin oder ketimingruppenhaltige Polyole, die durch Kodensation von 2-Amino-2-äthyl-1,3-propandiol, N-[2-Hydroxiäthyl]-äthylendiamin oder N,N-Bis-[2-hydroxiäthyl]äthylendiamin mit Ketonen wie Methylisobutylketon hergestellt werden.

Das Polyisocyanat wird bei Temperaturen von etwa 30 bis 100°C in stöchiometrischen Mentenverhältnissen mit Hydroxicarbonsäureestern umgesetzt. Um eine unkontrollierte Reaktion der Isocyanatgruppen zu vermeiden, wird unter Ausschluß von Feuchtigkeit und Luftsauerstoff gearbeitet und die Funktionalität des Polyisocyanats dadurch verringers, daß erst die Umsetzung mit den Hydroxidarbonsäurealkylestern und dann das Verknüpfen der restlichen Isocyanatgruppen über einen aminogruppenhaligen Polyalkohol erfolgt. Als andere Arbeitsweise hat sich auch die langsame Zugabe des Polyisocyanats in die vorelete Lösung aus Hydroxicarbonsäurealkylestern und aminogruppenhaltigem Polyalkohol in einem niedrigsiendenden, inerten Lösungsmittel wie Essigester, der später abdestilliert wird, beährt. Zur Verringerung der Reaktionfähigkeit und gleichzeitiger Elastifizierung können geringe Anteile des Hydroxicarbonsäurealkylesters molmäßig gegen längerkettige Alkohole, z.B. Äthylhexanol, ausgetauscht werden. Als Hydroxicarbonsäurealkylester finden z.B. Verwendung Dimethylolproionsäuremethylester, Milchsäure äthylester, Hydroxiessigsäurebutylester oder Saliclsäuremethylester. Als Aminocarbonsäurealkylester können z.B. Sarcosinsäureäthylester oder Antranilsäuremethylester eingesetzt werden.

Als Polyepoxiharze, die besonders bevorzugt mit Aminoalkylcarbonsäureestern und/oder Dicarbonsäuremonoalkylestern umgesetzt werden, eignen sich die weiter oben beschriebenen epoxigruppenhaltigen Harze, wobei mindestens zwei, bevorzugt mehr als zwei Epoxigruppen im Molekül vorhanden sein sollen. Die Monoester werden aus gesättigten oder ungesättigten Dicarbonsäureanhydriden, wie Maleinsäureanhydrid, Bernsteinsäureanhydrid oder Tetrahydrophthalsäureanhydrid und $C_1$ bis $C_6$ linearen oder verzweigten, gesättigten oder ungesättigten Monoalkoholen. bevorzugt Methanol und/oder Äthanol hergestellt. Ein geringer Überschuß des verwendeten Alkohols erhöht die Stabilität des Monoesters. Sowohl bei der Herstellung als auch bei der Zugabe zum Epoxiharz sollte die Reaktionstemperatur nach Möglichkeit unter 120°C, bevorzugt unter 100°C gehalten werden, um Umesterungen zu vermeiden. Aminogruppen werden am besten durch anteilweisen Einbau von sekundären Monoaminen wie Diäthylamin, N-Methyl-äthanolamin oder Diäthanolamin eingeführt oder zwei oder mehr Epoxiharzmoleküle über primäre Amine wie n-Butylamin oder Monoäthanolamin oder über Diamine mit sekundären Aminogruppen verknüpft.

Die Kombination der Komponente A und B efolgt vorzugsweise so, daß sie als Konzentrate vermischt und dann gemeinsam neutralisiert und allmählich mit Wasser verdünnt werden. Es ist bevorzugt, daß das Äquivalenzverhältnis zwischen der Summe von primären und/oder sekundären Aminogruppen der Komponente A (und B) zu den veresterten Carboxylgruppen (und Carboxylgruppen) der Komponente B im Bereich von 1:5 bis 1:0,1, vorzugsweise von 1:3 bis 1:1 liegt. Besonders bevorzugt wird ein stöchiometrisches Aquivalenzverhältnis angestrebt.

Die verschiedenen aminogruppenhaltigen Grundharztypen (Komponente A) können entweder allein oder als Gemisch mehrerer Typen mit dem zugehörigen Vernetzungsmittel eingesetzt werden. So kann es z.B. zur Abstimmung der mechanischen und elektrischen Eigenschaften notwendig sein, daß ein aminogruppenhaltiges Epoxiaminharz mit einem Polyaminoamidharz gemischt wird. Außerdem ist es zum Ausbalancieren der anwendungstechnischen Eigenschaften möglich, in die kathodisch abscheidbaren Bindemittel außer den beschriebenen Vernetzungsmitteln in geringem Umfang noch weitere modifizierende Harze einzuemulgieren. Als solche können dienen Maleinatharze, Styrol-Allylalkohol Copolymere, OH-gruppenhaltige Acrylcopolymere. OH-gruppenhaltige Epikoteester, blockierte Isocyanate sowie Amin- und phenol-formaldehyd-Harze. Um Fällungserscheinungen zu vermeiden, sollten nicht über 20 Gew.-%, besser unter 10 Gew.-% einemulgiert werden, und zur Verbesserung der Emulgierbarkeit entweder eine höhere OH-Zahl von etwa 100 bis 250 oder ein geringer Anteil an basischen Aminogruppen (Aminzahl unter etwa 60, besser unter 40) vorhanden sein.

Die Wasserlöslichkeit wird durch Salzbildung der aminogruppenhaltigen Harze mit sauren Verbindungen erzielt. Hierzu eignen sich beispielsweise Salzsäure, Essigsäure, Milchsäure, Malonsäure, Zitronensäure, Ameisensäure, Acrylsäure usw. Mit Wasser verdünnbare, als Bindemittel dienende kationische Harze können hergestellt werden, indem man dem basischen Harz 0,2 bis 1,2 Äquivalente, vorzugsweise 0,4 bis 1,0 Äquivalente der protonisierenden Säure bezogen auf das basische Stickstoffatom im Harz zusetzt und das Gemisch bei Temperaturen von etwa 20 bis 90°C gut rührt. Von der Herstellung der Harze eingeschleppte störende Lösungsmittel werden im Vakuum abdestilliert, am besten nach der hydrolytischen Zersetzung des Ketimins. Das Überzugsmittel kann zur Senkung der Viskosität. zur Steuerung der Abscheidespannung und zur Verbesserung des Verlaufs bis zu ungefähr 20 Gew.-% organischer Lösungsmittel enthalten. Es können hierbei wasserlösliche Lösungsmittel wie Alkohole, Glykoläther, Ketoalkohole oder geringe Anteile nicht wasserlöslicher Lösungsmittel wie Kohlenwasserstoffe verschiedener Kettenlänge verwendet werden. Es wird ein möglichst niedriger Gehalt an organischen Lösungsmitteln angestrebt.

Der Feststoffgehalt des Abscheidungsbades, in dem das Uberzugsmittel gemäß der Erfindung in verdünnter Form enthalten ist, beträgt nach dem Verdünnen mit Wasser zweckmäßig 5 bis 30 Gew.-%, vorzugsweise 10 bis 20 Gew.-%. Der pH-Wert des Bades liegt im allgemeinen zwischen 4,5 und 7,5, vorzugsweise. zwischen 5,5 und 7,0. Die elektrophoretische Abscheidung efolgt zweckmäßig frühestens 24 Stunden nach Herstellung des Bades. Während dieser Zeit wird zweckmäßig kontinuierlich gerührt, um eine völlig gleichmäßige Verteilung im Bad zu erreichen. Als Anode werden elektrisch leitfähige und nicht korrodierende Elektroden beispielsweise aus nichtrostendem Stahl oder Graphit verwendet. Der kathodisch zu beschichtende Gegenstand und die Anode werden in gleicher Weise, wie für die elektrophoretische Abscheidung bisher kenannt ist, in ein wässriges Bad getaucht. Während der Abscheidung wird das Bad bei zweckmäßig Temperaturen von 20 bis 35$^0$C gehalten. Festkörper, Abscheidetemperatur und -zeit, sowie Spannung werden so gewählt, daß die gewünschte Schichtstärke auf dem Blech nach Abspülen und Einbrennen erhalten wird.

Die Härtung efolgt durch 15 Minuten bis 1 Stunde langes Einbrennen bei 140 bis 210°C, bevorzugt 160 bis 180°C. Durch Einarbeiten von z.B. 0,05 bis 3 Gew.-% Umesterungskatalysatoren kann die Einbrenntemperatur erniedrigt oder die Vollständigkeit der Umsetzung beschleunigt werden. Als typische Katalysatoren können eingesetzt werden Ammoniumverbindungen wie Benzyltrimethylammoniumhydroxyd, organische Zinnverbindungen wie Dibutylzinndilaurat, Titankomplexe wie Butyltitanat oder Triäthanolamintitanat, Eisen-111-acetylacetonat, Zinkacetat, Bleiacetat, Cer-111-acetat, Antimontrioxid oder Kobaltnaphthenat.

Das konzentrierte, mit Wasser zu verdünnende Überzugsmittel gemäß der Efindung mit z,B. einem Festkörper von 86 bis 60 Gew.-% kann in üblicher Weise mit Kugelmühle Dreiwalze oder Sandmühle pigmentiert werden. Zur pigmentierung können übliche pigmente, Füllstoffe, Korrosionsschutzlnhibitoren und Lackhilfsmittel wie Antischaummittel verwendet werden, solange sie mit Wasser im sauren bis neutralen pH-Wert keine störenden Reaktionen eingehen, keine wasserlöslichen Fremdionen einschleppen und beim Altern nicht ausfallen. Die Lacke sind besonders für die Elektrotauchlackierung von Metallen geeignet und geben nach Einbrennen von 30 Minuten 180$^0$C glatte, glänzende, harte Filme mit guter Haftfestigkeit und Elastizität, sowie besonders guter Korrosionsbeständigkeit. Das pigment-Bindemittelverhältnis ist abhängig von der Viskosität des Bindemittels und liegt im allgemeinen zwischen 0,1:1 und 1,5:1.

Vernetzungsmittel A:

569,6 g eines biuretgruppenhaltigen aliphatischen Triisocyanats auf Basis Hexamethylendiisocyanat werden in 96 g wasserfreiem Äthylglykolacetat gelöst und auf 80°C erwärmt. In 25 Minuten werden 236 g Milchsäureäthylester zugetropft, danach 30 Minuten bei 80°C gehalten und dann in 10 Minuten 59 g Methyldiäthanolamin zugegeben. Nach 2 Stunden bei 80°C wird abgefüllt.

Festkörper: etwa 90 Gew.-%
Esterzahl (ber.) = 130 mg KOH/g Festharz
Aminzahl = 32 mg KOH/g Festharz

Vernetzungsmittel B:

594 g Triglycidylisocyanurat werden bei 90 bis 95°C aufgeschmolzen. Anschließend werden in 30 Minuten 500 g einer 95%-igen Bernsteinsäuremonomethylester-Lösung in Methanol zugetropft. Es wird erst bei 95 bis 100°C, später bei 120°C gerührt, bis die Säurezahl unter 0,5 liegt. Nach Verdünnen mit 100 g Butylglykol werden 65 g n-Butylamin langsam bei 60 bis 80°C unter Kühlung zugetropft. Man läßt anschließend noch zwei Stunden rühren und verdünnt mit sekundärem Butanol auf einen Festkörper von 75 Gew.-%.

Esterzahl (ber.) 178 mg KOH/g Festharz
Aminzahl = 39 mg KOH/g Festharz

**Beispiel 1**

Grundharz:

1394 g eines Polyglycidyläthers auf Basis Bisphenol A mit einem Epoxiäquivalentgewicht von 475 werden in 465 g Methylisobutylketon gelöst und unter Zusatz von 1,4 g Triphenylphosphin und 174 g Milchsäure, 80%-ig auf 125°C geheizt. Es wird das Reaktionswasser ausgekreist, bis eine Säurezahl von 0,2 erreicht ist. Danach wird auf 80°C abgekühlt und in 5 bis 10 Minuten ein Gemisch aus 65,1 g Monomethyläthanolamin und 116,2 g Methyl-aminopropylaminmethylisobutylketimin zulaufen gelassen, wobei die Temperatur bis auf etwa 120°C ansteigt. Danach wird etwa 2 Stunden auf dieser Temperatur gehalten und dann auf 95°C abgekühlt. Aminzahl = 75 mg KOH/α Festharz; $pK_b$-Wert ca 4,9. Dann werden 24,6 g Wasser und 93,4 g Milchsäure, 80%-ig zugesetzt, 2 Stunden bei 95°C hydrolysiert und das Methylisobutylketon abdestilliert. Anschließend wird mit 165 g Butylglykol und 940 g destilliertem oder entionisiertem Wasser auf etwa 60 Gew.-% verdünnt.

Festkörper: 62,8 Gew.-% (40 Min. bei 180°C im Umlufttrockenschrank erwärmen). MEO-Säure: 52,9 (Milliäquivalente Säuren auf 100 g Festkörper).

Abscheidungsbad:

255 g Grundharz werden auf etwa 50°C erwärmt und nacheinander mit 44,5 g Vernetzungsmittel A und 2,3 g Milchsäure, 80%-ig gemischt. Mit 1697 g destilliertem oder entionisiertem Wasser wird allmählich auf einen Festkörper von etwa 10 Gew.-% verdünnt.

MEQ-Säure: 63
pH-Wert: 6,6

Leitfähigkeit: 1450 $\mu Scm^{-1}$

Die Filme wurden 2 Minuten bei einer Badtemperatur von 30°C abgeschieden, mit Wasser abgespült und 25 Minuten bei 190°C eingebrannt, wobei im Dampfraum abgespaltenes Athanol nachgewiesen wurde. Die abgespaltenen Reaktionsprodukte werden so bestimmt, daß der elektrophoretisch abgeschiedene Film eine Stunde bei 100°C vorgetrocknet und ausgewogen wird. Der Gewichtsverlust, der danach zusätzlich bei den gewählten Einbrennbedingungen eintritt, wird dann als Spaltprodukte in prozent vom abgeschiedenen Material angegeben. Es wurden folgende Filmeigenschaften gemessen:

Spaltprodukte: 3,4%

Pendelhärte nach König (DIN 53 1 57) 192 s./2O4 s.

Erichsen-Tiefung (DIN 53 156) 1,5 bis 2,00 mm

Salzsprühnebelprüfung (DIN 53 167)

auf blankem Blech nach 96 Stunden:

80 Volt/l5µm 90 Volt/20µm

Flächenrost 2 1-2

Unterwanderung 3-6 mm 3-6 mm

auf Bonder 127 (ungeschliffene Seite) nach 240 Std.:

150 Vol/15µm 280 Volt/20µm

Flächenrost 2-3 3

Unterwanderung 3-5 mm 2-3 mm

**Beispiel 2**

Grundharz:

200 g Methylisobutylketon werden in einem Reaktionskolben mit Rückflußkühler erhitzt, und eventuell vorhandenes Wasser wird ausgekreist. In drei Stunden wird eine Lösung von

361 g n-Butylacrylat
191 g Styrol
95 g Glycidylmethyacrylat
231 g Hyrdoxipropylmethacrylat
1 g Triphenylphosphin
20 g Azo-bis-isobuttersäurenitril
100 g Methylisobutylketon

zugegeben, wobei die Temperatur nicht über 117°C ansteigen soll. Nach 30 Minuten werden nöchmals 5 g Azo-bis-isobuttersäurenitril zugegeben, und die Temperatur wird noch 1 Stunde unter Rühren gehalten. Danach wird auf 80°C abgekühlt, und in 10 Minuten werden 142 g einer 70%-igen Lösung von Methylaminopropylamin-methylisobutylketimin in Methyl-isobutylketon zugegeben. Anschließend wird 1 Stunde auf 80°C gehalten, und dann werden nacheinander 4 ml Diäthylamin und 382 g Butylglykol zugegeben. Anschließend werden 302 g Lösungsmittel unter Vakuum abdestilliert, und es wird mit sekundärem Butanol auf 70% Festkörper eingestellt.

Festkörper: 69,2 Gew.-% (40 m 180°C)

Aminzahl: 67 mg KOH/g Festharz

Viskosität: 3089 mpas (50%-ig in Butylglykol bei 25°C)

$pK_b$-Wert: etwa 3,8.

Abscheidungsbad:

231 g Grundharz werden auf etwa 50°C erwärmt und nacheinander mit 44,5 g Vernetzungsmittel A und 6 g Eisessig gemischt. Mit 1718 g entionisiertem Wasser wird allmählich auf einen Festkörper von etwa 10 Gew.-% verdünnt.

Spaltprodukte: 4,3 Gew.-%

MEQ-Säure: 64

ph-Wert: 6,8

Leitfähigkeit: 1450 $\mu Scm^{-1}$

Bei 30°C wurde nach 2 Minuten 120 Volt eine Trockenfilmstärke von 20 µm abgeschieden. Nach 25 Minuten Erwärmen bei 175°C wurde am glattverlaufenen Film gemessen

Pendelhärte nach König (DIN 53 157) 84 s./76 s.

Erichsen-Tiefung (DIN 53 156) 8.8 mm

**Beispiel 3**

Grundharz:

1316 g einer 75%-igen Xylol-Lösung eines polyglycidyläthers mit einem Epoxiäquivalentgewicht von 493 auf Basis Bisphenol A, 2 g Triphenylphosphin, 134 g Trimethylolpropan und 526 g N.N'-Diglycidyl-5,5-dimethylhydantoin werden zum Auskreisen von Wasser auf etwa 150°C erhitzt. Diese Temperatur wird gehalten, bis das Epoxiäquivalentgewicht der Lösung 564 beträgt. Nach Abkühlen auf 60°C wird eine Lösung von 395 g Monoäthanolamin-methylisobutylketimin und 1,5 g Borfluorid-Ätherat in 99 g Methylisobutylketon in 30 Minuten zugetropft. Die Temperatur wird in etwa 4 Stunden ao auf 120°C erhöht. Danach wird auf 40°C abgekühlt und 29 g Diäthylamin zugegeben. Eine Stunde später efolgt der Zusatz von 49 g Wasser und 220 g Butylglykol. Lösungsmittel und Aminreste werden bei Temperaturen bis zu 110°C unter vermindertem Druck abdestilliert. Anschließend wird mit sekundärem Butanol auf 72,3 Gew.-% Festkörper verdünnt.

Aminzahl: 87 mg KOH/g Festharz

Viskosität: 10,8 pas (nach Verdünnen auf 60 Gew.-% mit sek.Butanol bei 25°C)

Abscheidungsbad:

In 194 g Grundharz werden 10.0 g eines polyaminoamidharzes mit einer Aminzahl von 90 und einer Viskosität bei 75°C von ca. 1 00 pas unter vorsichtigem Erwärmen gelöst. Nacheinander werden 60 g Vernetzungsmittel A und 6 g Essigsäure zugemischt. Mit 1730 g destilliertem oder entionisiertem Wasser wird allmählich auf einen Festkörper von etwa 10 Gew.-% verdünnt.

MEQ-Säure: 50

pH-Wert: 6,95

Leitfähigkeit: 1760 $\mu Scm^{-1}$

Die Filme wurden 2 Minuten bei einer Badtemperatur von 30°C auf Bonder 127 abgeschieden, mit Wasser abgespült und 25 Minuten bei 180°C eingebrannt.

Spaltprodukte: 3,8 Gew.-%

Pendelhärte nach König (DIN 53 1 57) 207 s./211 s.

Abscheidespannung: 100 Volt für 17-19µm Trockenfilmstärke

**Beispiel 4**

Grundharz:

1316 g einer 75%igen Xylol-Lösung eines Polyglycidyläthers mit einem Epoxiäquivalentgewicht von 493 auf Basis Bisphenol A, 2 g Triphenylphosphin, 118 g Hexandiol-1,6 und 297 g Triglycidylisocyanurat werden zum Auskreisen von Wasser auf etwa 150°C erhitzt. Diese Temperatur wird gehalten. bis das Epoxiäquivalentgewicht der Lösung 559 beträgt. Nach Abkühlen auf 55°C wird eine Lösung von 395 g Monoäthanolaminmethylisobutylketimin und 4,9 g N,N-Dimethyl-benzylamin in 99 g Methylisobutylketon in 30 Minuten zugetropft. Die Temperatur wird in etwa 4 Stunden bis auf 120°C erhöht. Danach wird auf 80°C abgekühlt, und 29 g Diäthylamin werden zugegeben. Eine Stunde später erfolgt der Zusatz von 49 g Wasser und 454 g Butylglykol, Xylol, Methylisobutylketon und Aminreste werden bei Temperaturen von 110°C unter vermindertem Druck abdestilliert und anschließend mit sekundärem Butanol auf 68.0 Gew.-% Festkörper verdünnt.

Aminzahl: 104 mg KOH/g Festharz

Viskosität: 16,8 pas (nach Verdünnen auf 60 Gew.-% mit Butylglykol bei 25°C)

Abscheidungsbad:

In 206 g Grundharz werden 10 g eines polyaminoamidharzes mit einer Aminzahl von 90 und einer Viskosität bei 75°C von ca. 100 pas unter vorsichtigem Erwärmen gelöst. Nacheinander werden 60 g Vernetzungsmittel A und 6 g Essigsäure zugemischt. Mit 1718 g destilliertem oder entionisiertem Wasser wird allmählich auf einen Festkörper von etwa 10 Gew.-% verdünnt.

MEQ-Säure: 50

pH-Wert: 7,0

Leitfähigkeit: 1670 $\mu Scm^{-1}$

Die Filme wurden 2 Minuten bei einer Badtemperatur von 30°C auf Bonder 127 abgeschieden, mit Wasser abgespült und 25 Minuten bei 180°C eingebrannt.

Spaltprodukte: 3,7 Gew.-%

Pendelhärte nach König (DIN 53 157) 213 s./211 s.

Abscheidespannung: 100 Volt für 18-20 µm Trockenfilmstärke

**Beispiel 5**

Grundharz:

430 g technisches Xylol, 2 g Triphenylphosphin, 102 g Versaticsäure 10 und 1300 g polyglycidyläther auf Basis Bisphenol A mit einem Epoxiäquivalentgewicht von 650 werden unter Stickstoff zum Auskreisen von Wasser auf etwa 150°C erhitzt. Diese Temperatur wird gehalten, bis die Säurezahl null ist. Diese heiße Lösung wird dann langsam zu einer Lösung von 255 g Athylendiamin in 450 g n-Butanol zugegeben, wobei die Temperatur bis auf etwa 90°C ansteigt. Zwei Stunden nach Zugabe wird unter vermindertem Druck bei 150°C alles Lösungsmittel und überschüssiges Amin sorgfältig abdestilliert. Es wird mit Butylglykol und sekundärem

Butanol (1:3) auf einen Festkörper von 70.9 Gew.-% verdünnt.

Aminzahl: 94 mg KOH/g Festharz

Viskosität: 6,5 pas (nach Verdünnen auf 60 Gew.-% mit Butylglykol bei 25°C)

Abscheidungsbad:

10 g eines polyaminoamidharzes mit einer Aminzahl von 90 und einer Viskosität von ca. 100 Pas bei 75°C werden in 40 g Butylglykol gelöst und mit 197 g Grundharz und 50 g Vernetzungsmittel B gemischt. Nach Zusatz von 7.2 g Essigsäure wird mit 1695 g destilliertem oder entionisiertem Wasser allmählich auf einen Festkörper von 10 Gew.-% verdünnt.

MEQ-Säure: 60

pH-Wert: 6,3

Leitfähigkeit: 1480 $\mu Scm^{-1}$

Die Filme wurden 2 Minuten bei einer Badtemperatur von 30°C auf Bonder 127 abgeschieden, mit Wasser abgespült und 25 Minuten bei 160°C eingebrannt.

Spaltprodukte: 4,0 Gew.-%

Abscheidespannung: 130 Volt für 18-19 µm Trockenfilmstärke

Pendelhärte nach König (DIN 53 157) 227 s./227 s.

**Beispiel 6**

Vorkondensat:

2591 g Pivalinsäure-neopentylglykolester werden aufgeschmolzen und 1405 g Isophthalsäure zugegeben. Die Temperatur wird unter Inertgas und Rühren soweit erhöht, bis Wasser abdestilliert. Nach Erreichen einer Säurezahl von etwa 10 wurden 2,3 g Antimonoxid und 2,2 g Zinkacetat als Katalysator zugegeben. Es wird bei einer maximalen Temperatur von 240°C gehalten, bis die Säurezahl 0,5 beträgt, und dann mit Athylacetat auf 60 Gew.-% Festkörper verdünnt.

Grundharz:

Zu 1186 g dieses Vorkondensats werden bei 80°C 930 g eines Biurets aus Hexamethylendiisocyanat und Wasser (Desmodur N®) gegeben. Nach Erreichen eines Gehaltes von 8,4% NCO werden 160 g Athylhexylalkohol zugegeben. Es wird bei 80°C gehalten, bis ein Gehalt von 3,8% NCO erreicht ist. Dann wird mit 795 g Athylacetat verdünnt. Diese warme Lösung wird anschließend in etwa 1,5 Stunden zu 390 g einer 67,7%-igen Lösung von Methylaminopropylamin-methylisobutylketimin in Methylisobutylketon gegeben, wobei die Temperatur durch zeitweises Kühlen auf etwa 40°C gehalten wird. Danach werden 23,8 g Diäthylamin zugegeben, in 2 Stunden auf 75°C erwärmt und 696 g Butylglykol eingerührt. Anschließend werden Athylacetat und Aminreste bei Temperaturen von 80°C unter Vakuum abdestilliert.

Aminzahl: 50 mg KOH/g Festharz

Festkörper: 74,7 Gew.-% (nach 40 Minuten Einbrennen bei 180°C im Umlufttrockenschrank)

Abscheidungsbad:

214 g Grundharz werden nacheinander mit 60 g Vernetzungsmittel A und 7,2 g Essigsäure gemischt. Mit 1719 g destilliertem oder entionisiertem Wasser wird allmählich auf einen Festkörper von etwa 10 Gew.-% verdünnt.

MEQ-Säure: 60

pH-Wert: 7,1

Leitfähigkeit: 1600 $\mu Scm^{-1}$

Bei 30°C werden auf Bonder 127 nach 2 Minuten 200 Volt eine Trockenfilmstärke von 20 µm abgeschieden. Nach 25 Minuten Erhitzen auf 160°C wurde ein glattverlaufender, glänzender Film mit hoher Härte und guter Biegeelastizität erhalten.

**Patentansprüche**

1. Kathodisch abscheidbares wäßriges Elektrotauchlack-Überzugsmittel, das ein durch Protonisieren mit Säuren wasserverdünnbares organisches Kunstharz-Eindemittel, enthaltend eine organische, aminhaltige Kunstharz-Komponente und ein Vernetzungsmittel aus dem beim Vernetzen niedere Alkohole abgespalten werden, sowie Pigmente, Füllstoffe Korrosions schutzinhibitoren, Lackhilfsmittel, gegebenenfalls Katalysatoren und, in einer Menge von bis zu 15 Gew.-%, bezogen auf das Oesamtgewichtdes Überzugsmittels, organische Lösungsmittel enthält, dadurch gekennzeichnet, daß es als Bindemittel enthält:

A) 55 bis 95 Gew.-%, bezogen auf die Gesamtmenge des Bindemittels, eines primäre und/oder sekundäre sowie gegebenenfalls auch tertiäre Aminogruppenenthaltenden organischen Kunstharz-Bindmittels mit einem mittleren Molekulargewicht ($\bar{M}n$) von etwa 500 bis 10 000, einem $pK_b$-Wert von etwa 3 bis 7 und einer Aminzahl von etwa 30 bis 150, und

B) 5 bis-45 Gew.-% Vernetzungsmittel mit einem mittleren Molekulargewicht ($\bar{M}n$) von etwa 500 bis 5000, das endständige Carboxylgruppen enthält, von denen ein solcher Anteil mit Monoalkoholen mit 1 bis 6 Kohlenstoffatomen verestert ist, daß die Komponente B während der Abscheidung nicht zur Anode wandert

und eine Esterzahl von 30 bis 350, bevorzugt von 100 bis 250, aufweist, wobei die Estergruppen in neutralem wäßrigem Medium weitgehend stabil sind, jedoch im basischen Medium bei Temperaturen über etwa 140°C gegenüber primären und/oder sekundären Aminogruppen des Kunstharz-Bindemittels A reaktionsfähig sind, und wobei dann, wenn das Vernetzungsmittel ein Reaktionsprodukt eines Isocyanats mit einer eine Carbonsäureestergruppe enthaltenden Verbindungs ist, es ein Additionsprodukt von Hydroxicarbonsäurealkylestern an Harze mit Isocyanatgruppen ist.

2. Überzugsmittel nach Anspruch 1, dadurch gekennzeichnet, daß die Komponente A einen $pK_b$-Wert von 3 bis 5,5 aufweist und daß die Estergruppe der Komponente B bei Temperaturen über 160°C gegenüber primären und/oder sekundären Aminogruppen des Kunstharz-Bindemittels A reaktionsfähig sind.

3. Überzugsmittel nach Anspruch 1 oder 2, dadurch gekennzeichnet, daß das Äquivalenzverhältnis zwischen primären und/oder sekundären Aminogruppen der Kompone zu Carboxylgruppen und veresterten Carboxylgruppen der Komponente B im Bereich von 1:5 bis 1:0,1, vorzugsweise von 1:1, liegt.

4. Überzugsmittel nach einem der Ansprüche 1 bis 3, dadurch gekennzeichnet, daß die Kunstharz-Bindemittel der Komponente A Umsetzungsprodukte aus mindestens eine Epoxigruppe oder Isocyanatgruppe pro Molekül enthaltenden Harzen mit wenigstens einem amino- und/oder hydroxylgruppenhaltigen Ketimin und/oder wenigstens einem Polyamin sind.

5. Überzugsmittel nach Anspruch 4, dadurch gekennzeichnet, daß die epoxigruppenhaltigen Harze Polyglycidyläther der Formel

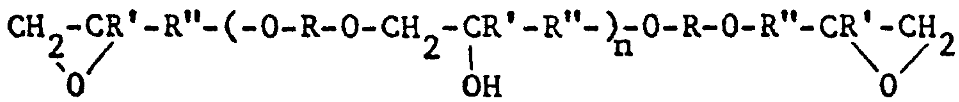

worin bedeuten:

R = 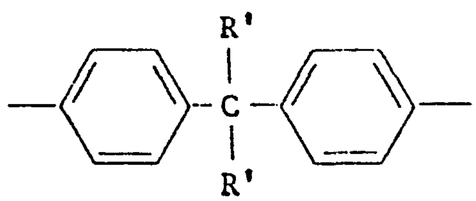

R' = Wasserstoff oder $-C_nH_{2n+1}$
R" = $-(CR'_2)_n$
n = 0 bis 3
mit einem mittleren Molekulargewicht ($\bar{M}n$) von 340 bis 2000 und einem Epoxiäquivalentgewicht von 170 bis 1500 sind.

6. Überzugsmittel nach Anspruch 4, dadurch gekennzeichnet, daß die epoxigruppenhaltigen Harze Copolymere von Glycidyl(meth)acrylat mit ungesättigten Monomeren sind und ein mittleres Molekulargewicht ($\bar{M}n$) von 800 bis 8000 und ein Epoxiäquivalentgewicht von 800 bis 3000 haben.

7. Überzugsmittel nach Anspruch 4, dadurch gekennzeichnet, daß die Kunstharz-Bindemittel der Komponente A Umsetzungsprodukte von Epoxigruppen enthaltenden Harzen mit niederen aliphatischen Polyaminen sind.

8. Überzugsmittel nach Anspruch 4, dadurch gekennzeichnet, daß die Kunstharz-Bindemittel der Komponente A Umsetzungsprodukte von mindestens zwei Isocyanatgruppen enthaltenden Polymeren mit aminogruppenhaltigen Alkylketiminen sind, deren Ketimingruppen beim Lüsen in Wasser hydrolysiert werden.

9. Überzugsmittel nach einem der Ansprüche 1 bis 8, dadurch gekennzeichnet, daß alle endständigen Carboxygruppen der Komponente B verestert sind.

10. Uberzugsmittel nach einem der Ansprüche 1 bis 9, dadurch gekennzeichnet, daß die endständigen Carboxylgruppen der Komponente B mit primären Alkoholen mit einem Siedepunkt unter 140°C verestert sind.

11. Überzugsmittel nach einem der Ansprüche 1 bis 10, dadurch gekennzeichnet, daß die Komponente B eine Aminzahl von 0 bis 60, vorzugsweise von 10 bis 50, aufweist.

12. Überzugsmittel nach einem der Ansprüche 1 bis 11, dadurch gekennzeichnet, daß die Komponente B besteht aus Additionsprodukten von HydroXicarbonsäurealkylestern an Harze mit additionsfähigen Gruppen,

vorzugsweise Isocyanat- oder Epoxigruppen und/oder Additionsprodukten von Aminocarbonsaurealkylestern an Harze mit Epoxigruppen.

13. Überzugsmittel nach einem der Ansprüche 1 bis 12, dadurch gekennzeichnet, daß die Komponente B aus Umsetzungsprodukten von Dicarbonsäuremonoalkylestern mit epoxi- und/oder hydroxylgruppenhaltigen Harzen besteht.

**Revendications**

1. Un revêtement d'enduction aqueuse déposable par électrophorèse qui contient un liant en résine synthétique organique que l'on peut rendre soluble dans l'eau par protonisation avec des acides, qui contient un composant organique en résine synthétique avec des groupes amino et un agent de réticulation duquel à la réticulation se séparent des alcools inférieurs et aussi des pigments, des agents de remplissage, des inhibiteurs de protection contre la corrosion, des adjuvants pour laques, éventuellement des catalyseurs et, en une quantité allant jusqu'à 15 % en poids par rapport au poids total du revêtement, des solvants organiques. carectérisé en ce qu'il contient comme liant en résine synthétique:

a) de 55 à 95 % en poids, par rapport à la quantité totale de liant, d'un liant en résine synthétique contenant des groupes amino primaires et/ou secondaires ainsi qu'éventuellement tertiaires avec un poids moléculaire moyen ($\bar{M}n$) de 500 à 10 000, qui présente un $pK_b$ de 3 à 7 et un indice d'amine de 30 à 150, et

b) de 5 à 45 % d'un agent réticulant avec un poiés moléculaile moyen ($\bar{M}n$) de 500 à 5000, qui contient des groupes carboxyle termineux, dans lequel est estérifiée une fraction telle, avec des monoalcools contenant de 1 à 6 atomes de carbone, que le composant B ne migre pas à l'anode pendant le dépôt et présente un nombre d'ester de 30 à 350, de préférence de 100 à 250, les groupes esters étant largement stables en milieu agueux neutre, mais réactifs vis-à-vis des groupes amino primaires et/ou secondaires du lient en résine synthétique A en milleu basique à des températures dépassant 140°C, et étant alors un produit d'addition d'alcoylesters d'acides carboxyliques hydroxylés sur des résines ayant des groupes isocyanate si l'agent réticulant est un produit de réaction d'un isocyanate avec un composé ayant un groupe ester d'acide carboxylique.

2. Revêtement selon le revendication 1, caractérisé en ce que le composent A présente un $pK_b$ de 3 à 5,5 et en ce que les groupes ester du composent B sont réactifs à des températures supérieures à environ 160°C vis-à-vis des groupes amino primaires et/ou secondaires du lient en résine synthétique A.

3. Revêtement selon les revendications 1 ou 2, caractérisé en ce que le rapport équivalent entre les groupes amino primaires et/ou secondaires du composent A et les groupes carboxyle et les groupes carboxyle estérifiés du composant B se situe dans un intervalle de 1:5 à 1:0,1, ou mieux d'environ 1:1.

4. Revêtement selon l'une quelconque des revendications 1 à 3, caractérisé en ce que les lients en résine synthétique du composent A sont des produits de réection de résines contenent eu moins un groupe époxy ou un groupe isocyanate per molecule avec au moins une cétimine et/ou au moins une polyamine contenant des groupes amino et/ou hydroxyle.

5. Revêtement selon la revendication 4, caractérisé en ce que les résines contenent des groupes époxy sont des polyglycidyléthers de formule

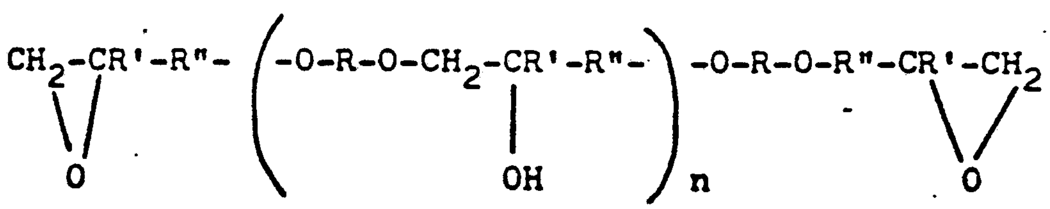

où

R = 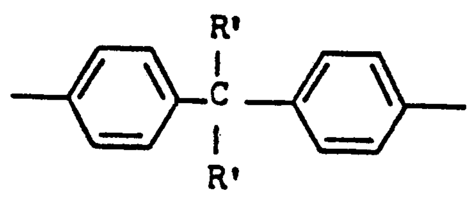

R' = hydrogène èn $-C_nH_{2n+1}$

R" = $-(CR'_2)_n$

n = 0 à 3

avec un poids moléculaire moyen ($\bar{M}\bar{n}$) d'environ 340 à-2000 et un poids d'équivlent époxy d'environ 170 à 1500.

6. Revêtement selon la revendication 4, caractérisé en ce que les résines contentent des groupes époxy sont des copolymères de glycidyl(méth)acrylate evec des monomères insaturés et ont un poids moléculaire moyen ($\bar{M}\bar{n}$) d'environ 800 à 8 000 et un poids d'équivalent époxy de 800 à 3 000.

7. Revêtement selon la revendication 4 caractérisé en ce que les liants en résine synthétique du composent A sont des produits de réaction de résines contenent des groupes époxy avec des polyamines aliphatiques inferieures.

8. Revêtement selon la revendication 4, caractérisé en ce que les liants en résine synthétique du composant A sont les produits de réaction de polymère contenant au moins deux groupes isocyanates avec des alcoylcétimines contenant des groupes amino, dont les groupes cétimine ont été hydrolysés en solution dans l'eau.

9. Revêtement selon l'une des revendicetions 1 à 8, caractérisé en ce que pour l'essentiel tous les groupes carboxyle terminaux du composant B sont estéritiés.

10. Revêtement selon l'une des revendicetions 1 à 9, caractérisé en ce que les groupes carboxyle terminaux du composant B sont estérifiés avec des alcools primeires ayant un point d'ébullition inférieur à environ 140° C.

11. Revêtement selon l'une des revendications 1 à 10, caractérisé en ce que le composant B présente un indice d'amine de 0 à 60, de manière préférentielle de 10 à 50.

12. Revêtement selon l'une des revendications 1 à 11 caractérisé en ce que les composants B sont des produits d'addition d'alcoylester d'acides carboxyliques hydroxylés sur des résines ayant des groupes susceptibles de présenter des phénomènes d'addition de manière préférentielle des isocyanate ou époxy et/ou des produits d'addition d'alcoylesters d'acides aminocarboxyliques sur des résines ayant des groupes époxy,

13. Revêtement selon l'une des revendications 1 à 12, caractérisé en ce que les composants B sont les produits de réaction de monoalcoylesters d'acides dicarboxyliques avec des résines contenant des groupes. époxy et/ou hydroxy.

## Claims

1. An aqueous cathodic electrodeposition lacquer coating composition containing an organic synthetic resin binder, which is dilutable with water by protonization with acids ahd which contains an organic amine-containing synthetic resin component and a crosslinking agent from which lower . alcohols are released on crosslinking, and also pigments, fillers, corrosion inhibitors, lacquer auxiliaries, optionally catalysts and, in a quantity of up to 15% by weight, based on the total weight of the coating composition, organic solvents, characterized in that it contains as binder:.

A) from 55 to 95% by weight, based on the total quantity of binder, of an organic synthetic resin binder containing primary and/or secondary and, optionally, also tertiary amino groups and having an average molecular weight (Mn) . of from about 500 to 10,000, a $pK_b$-value of from about 3 to 7 and an amine number of from about 30 to 150 and

B) from 5 to 45% by weight of a crosslinking agent having an average molecular weight (Mn) of from about 500 to 5000 and containing terminal carboxyl groups of which such a proportion is esterified with $C_1$-$C_6$ monoalcohols that component B does not migrate to the anode during deposition and has an ester number of from 30 to 350 and preferably from 100 to 250, the ester groups being largely stable in neutral aqueous medium, but reactive to primary and/or secondary amino groups of the synthetic resin binder A in basic medium at tamperatures above-about 140° C and, when the crosslinking agent is a reaction product of an isocyanate with a compound containing a carboxylic acid ester group, it is an adduct of hydroxycarboxylic acid alkyl esters with resins containing isocyanate groups.

2. A coating composition as claimed in Claim 1, characterized in that component A has a $pK_b$-value of from 3 to 5.5 and in that the ester group of component B is reactive to primary and/or secondary amino groups of the synthetic resin binder A at temperatures above 160° C.

3. A coating composition as claimed in Claim 1 or 2, characterized in that the equivalence ratio of primary and/or secondary amino groups in component A to carboxyl groups and esterified carboxyl groups in component B is from 1:5 to 1:0.1 and preferably 1:1.

4. A coating composition as claimed in any of Claims 1 to 3, characterized in that the synthetic resin binders of component A are reaction products of resins containing at least one epoxide group or isocyanate group per molecule with at least one amino-group- and/or hydroxyl-groupcontaining ketimine and/or at least one polyamine.

5. A coating composition as claimed in Claim 4, characterized in that the resins containing epoxide groups are polyglycidylethers corresponding to the following formula

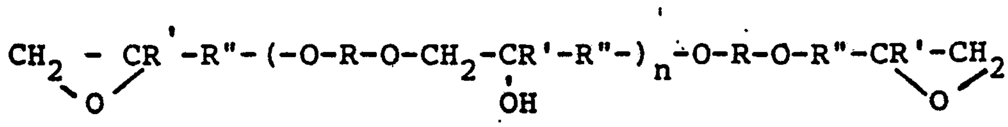

in which

R = 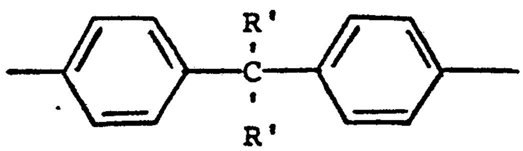

R' = hydrogen or $-C_nH_{2n+1}$
R" = $-(CR'_2)_n-$
n = 0 to 3
with an average molecular weight ($\bar{M}n$) of from 340 to 2000 and an epoxide equivalent weight of from 170 to 1500.

6. A coating composition as claimed in Claim 4, characterized in that the resins containing epoxide groups are copolymers of glycidyl (meth)acrylate-with unsaturated monomers and have an average molecular weight ($\bar{M}n$) of from 800 to 8000 and an epoxide equivalent weight of from 600 to 3000.

7. A coating composition as claimed in Claim 4, characterized in that the synthetic resin binders of component A are reaction products of resins containing apoxide groups with lower aliphatic polyamines.

8. A coating composition as claimed in Claim 4, characterized in that the synthetic resin binders of component A are reaction products of polymers containing at least two isocyanate groups with alkyl ketimines containing amino groups, of which the ketimine groups are hydrolyzed on dissolution in water.

9. A coating composition as claimed in any of Claims 1 to 6, characterized in that all the terminal carboxy groups of component B are esterified.

10. A coating composition as claimed in any of Claims 1 to 9, characterized in that the terminal carboxyl groups of component B are esterified with primary alcohols having a boiling point below 140° C.

11. A coating composition as claimed in any of Claims 1 to 10, characterized in that component B has an amine number of from 0 to 60 and preferably of from 10 to 50.

12. A coating composition as claimed in any of Claims 1 to 11, characterized in that component B consists of adducts of hydroxycarboxylic acid alkyl esters with resins containing groups capable of addition, preferably isocyanate or epoxy groups, and/or adducts of aminocarboxylic acid alkyl esters with resins containing epoxy groups.

13. A coating composition as claimed in any of Claims 1 to 12, characterized in that component B consists of reaction products of dicarboxylic acid monoalkyl esters with resins containing epoxy and/or hydroxyl groups.